# DEMANDE DE BREVET EUROPEEN

(11) **EP 2 403 218 A1**
(43) Date de publication de la demande: **04.01.2012**
(21) Numéro de dépôt: 11171784.9
(22) Date de dépôt: 28.06.2011
(51) Int. Cl.: H04L 29/08, G06F 17/30, H04M 3/51, H04M 3/58

(54) **Procédé de création dynamique d'un groupe de contacts**

(30) Priorité: 30.06.2010 FR 1002751
(71) Demandeur: Alcatel Lucent, 75007 Paris (FR)
(72) Inventeur: Ferelloc, Jean-Christophe, 29806 Brest (FR); Filoux, Thierry, 29806 Brest (FR)
(74) Mandataire: Mouney, Jérôme

(57) **Abrégé**

La présente invention concerne un procédé de création dynamique d'un groupe de contacts apte à fonctionner avec une application de communication (2) sur un terminal utilisateur (1), ledit procédé comportant les étapes de fonctionnement suivantes:
- génération via ledit terminal utilisateur d'une requête de création d'un groupe de contacts, ladite requête contenant des caractéristiques désirées desdits contac ;
- transmission d'au moins une sous-requête de ladite requête, contenant au moins une caractéristique élémentaire, ladite caractéristique élémentaire correspondant à une des caractéristiques désirées, vers au moins une première base de données;
- sélection des données correspondant à la au moins une caractéristique élémentaire dans ladite au moins une base de données (4);
- génération d'un groupe de contacts, ledit groupe de contacts étant apte à fonctionner avec ladite application;
- transmission dudit groupe de contacts vers ledit terminal utilisateur.

## Description

La présente invention concerne un procédé de création dynamique d'un groupe de contacts dans une application de communication.

Une application de communication est un logiciel permettant la communication entre utilisateurs de l'application de communication, via un réseau de communication, notamment le réseau Internet. On entend par groupe de contacts, un regroupement d'utilisateurs de l'application de communication avec lesquelles un utilisateur de l'application de communication peut interagir. Les groupes de contacts facilitent donc la communication de groupe, la construction et la solidification de liens sociaux, ou encore le travail collaboratif.

De façon connue, pour créer un groupe de contacts dans une application de communication, un utilisateur ajoute lesdits contacts un à un, manuellement, en renseignant des informations unitaires sur la personne à ajouter au groupe dans une interface graphique de l'application de communication. Par exemple avec l'application de communication Skype™, pour ajouter un contact, on doit rentrer son nom, ou bien son « pseudo Skype™ » ou encore son adresse e-mail.

Une telle solution présente toutefois certains inconvénients. En effet, le procédé existant pour créer un groupe de contacts est long et fastidieux si l'on souhaite ajouter un grand nombre de contacts.

Dans ce contexte, la présente invention a pour but de fournir un procédé de création de groupe plus rapide et plus efficace.

A cette fin, l'invention propose un procédé de création dynamique d'un groupe de contacts apte à fonctionner avec une application de communication sur un terminal utilisateur, ledit procédé comportant les étapes suivantes :
- génération via ledit terminal utilisateur d'une requête de création d'un groupe de contacts, ladite requête contenant des caractéristiques désirées desdits contacts ;
- transmission d'au moins une sous-requête de ladite requête, contenant au moins une caractéristique élémentaire, ladite caractéristique élémentaire correspondant à une des caractéristiques désirées, vers au moins une première base de données ;

- sélection des données correspondant à la au moins une caractéristique élémentaire dans ladite au moins une base de données ;
- génération d'un groupe de contacts, ledit groupe de contacts étant apte à fonctionner avec ladite application ;
- transmission dudit groupe de contacts vers ledit terminal utilisateur.

Grâce à l'invention, des groupes de contacts sont créés dynamiquement.

Le procédé selon l'invention peut également présenter une ou plusieurs des caractéristiques ci-dessous, considérées individuellement ou selon toutes les combinaisons techniquement possibles :
- le procédé fait intervenir un serveur de contacts, le dit serveur de contacts intervenant dans au moins une des étapes de fonctionnement suivantes :
- transmission de la requête générée par le terminal utilisateur vers le serveur de contacts ;
- transmission des données sélectionnées vers le serveur de contacts ;
- préalablement à la génération du groupe de contacts, mise en forme, par ledit serveur de contacts, des données sélectionnées, selon un format apte à être exploité par l'application de communication.

On entend par serveur de contacts, un serveur apte à communiquer avec des terminaux utilisateurs et des bases de données, et à construire des groupes de contacts pour applications de communication.
- les étapes de fonctionnement sont répétées régulièrement ;
- les étapes de fonctionnement sont répétées périodiquement ;
- le procédé comporte en outre l'étape suivante, entre l'étape de transmission de ladite requête dudit terminal utilisateur vers un serveur de contacts et l'étape de transmission d'au moins une sous-requête de ladite requête :
   -> division par le serveur de contacts de la requête en plusieurs sous-requêtes ;
- le procédé comporte en outre les étapes suivantes, intervenant entre l'étape de transmission des données sélectionnées vers le serveur de contacts et l'étape de mise en forme des données par ledit serveur de contacts :
   -> transmission vers au moins une deuxième base de données, d'une nouvelle requête générée par le serveur de contacts, ladite nouvelle requête étant établie en fonction des données sélectionnées
   -> sélection de données dans ladite seconde base de données
   -> transmission des données sélectionnées vers le serveur de contacts
- la requête est générée suite à une intervention d'un utilisateur du terminal utilisateur.
- la requête est générée suite à un appel entrant dans l'application de communication.
- les caractéristiques désirées desdits contacts sont déterminées automatiquement par des balises de l'appel entrant ;

D'autres caractéristiques et avantages de l'invention ressortiront clairement de la description qui en est donnée ci-dessous, à titre indicatif et nullement limitatif, en référence aux figures annexées, parmi lesquelles :
- la figure 1 illustre schématiquement un exemple de réalisation d'un premier mode de réalisation selon l'invention
- la figure 2 illustre schématiquement un exemple de réalisation d'un deuxième mode de réalisation selon l'invention
- la figure 3 illustre schématiquement un exemple de réalisation d'un troisième mode de réalisation selon l'invention
- la figure 4 illustre schématiquement les étapes du premier mode de réalisation selon l'invention
- la figure 5 illustre schématiquement les étapes du deuxième mode de réalisation selon l'invention
- la figure 6 illustre schématiquement les étapes du troisième mode de réalisation selon l'invention

### MODE DE REALISATION 1

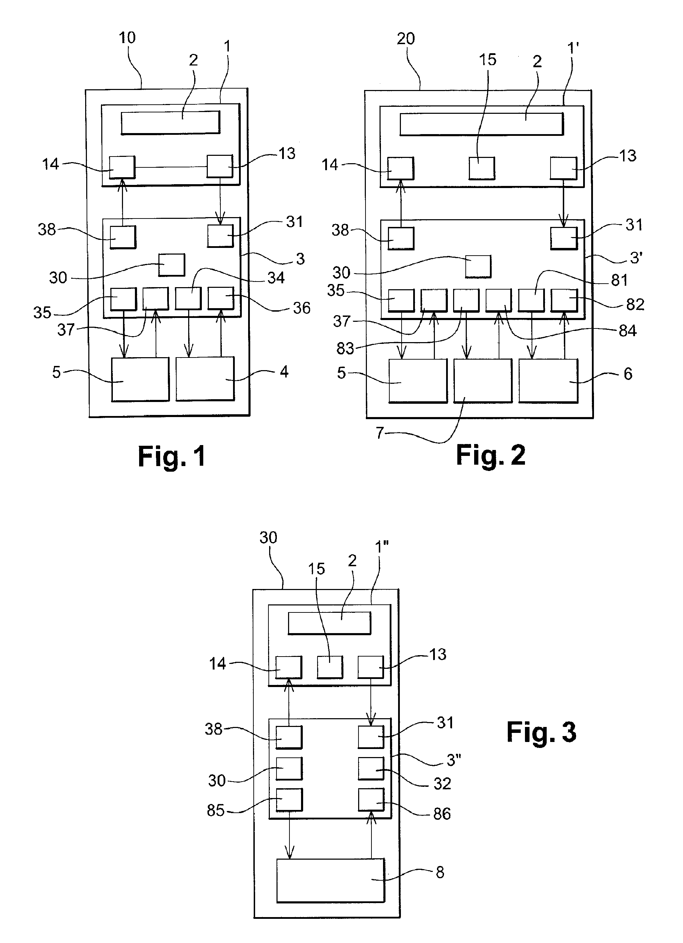

La figure 1 représente schématiquement un premier mode de réalisation d'un système 10 de communication selon l'invention. Ce premier mode de réalisation est particulièrement adapté à un centre d'appels. On appelle centre d'appels une structure recevant et traitant des appels téléphoniques extérieurs.

Le système 10 comporte :
- un terminal utilisateur 1 sur lequel est installée une application de communication 2. L'application de communication 2 est dédiée à la communication entre les opérateurs du centre d'appels. Elle est par exemple du type « Alcatel-Lucent My Teamwork™ », ou « Microsoft Office Communicator™ ».
- un serveur de contacts 3
- une première base de données 4 comprenant ici des informations dynamiques sur les employés du centre d'appels. Ces informations sont par exemple leur statut de connexion (s'ils sont connectés à l'application de communication, ou non) ou l'équipe à laquelle ils sont affectés...
- une deuxième base de données 5 comprenant ici des informations statiques sur les employés du centre d'appels. Ces informations sont par exemple leur adresse mail, ou leur numéro de téléphone.

Le terminal 1 comporte :
- des moyens de transmission de données 13 vers le serveur de contacts 3
- des moyens de réception de données 14 provenant du serveur de contacts 3

Le serveur de contacts 3 comporte :
- des moyens de consolidation 30. D'une manière générale, dans les exemples qui sont détaillés, les moyens de consolidation 30 ont pour fonction de générer des listes de contacts exploitables par l'application de communication 2.
- des moyens de réception de données 31 provenant du terminal 1
- des moyens de transmission de données 34 vers la première base de données 4
- des moyens de transmission de données 35 vers la seconde base de données 5
- des moyens de réception de données 36 provenant de la première base de données 4
- des moyens de réception de données 37 provenant de la seconde base de données 5
- des moyens de transmission de données 38 vers le terminal 1

Dans le premier mode de réalisation de l'invention, l'utilisateur est un opérateur du centre d'appels. Il est installé sur le terminal 1 et veut créer un groupe de contacts dans l'application de communication 2. On entend par groupe de contacts une liste de personnes pouvant être contactées par l'utilisateur grâce par exemple à la présence dans un fichier de leur adresse mail ou leur numéro de téléphone.

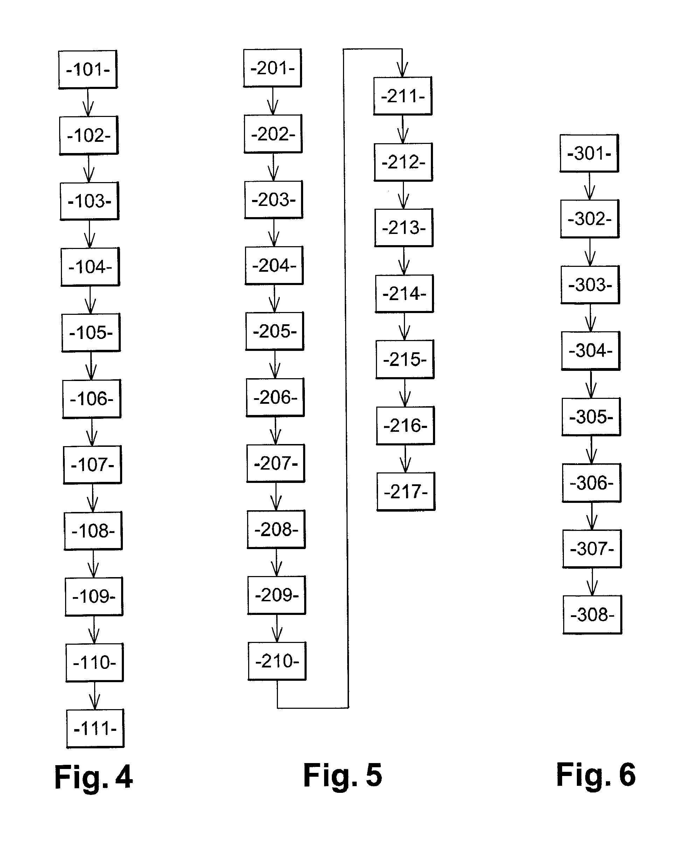

La figure 4 représente le déroulement des étapes du procédé pour la création du groupe de contacts en utilisant un système 10 tel qu'illustré à la figure 1.

Selon une première étape 101, l'utilisateur demande la création d'un groupe de contacts, via une interface graphique de l'application de communication 2. Les contacts demandés dans le groupe sont par exemple les opérateurs affectés à l'équipe A, qui sont connectés à l'application de communication 2.

Selon une deuxième étape 102, une requête de création de groupe est générée dans l'application de communication 2 puis transférée au serveur de contacts 3 via les moyens de transmission 13. Le but de cette requête est dans cet exemple d'informer le serveur de contacts 3 que les contacts recherchés sont les membres de l'équipe A, qui sont connectés. Par exemple, si l'équipe A est l'équipe nommée VIPSupport, c'est-à-dire l'équipe qui s'occupe des personnes importantes, la requête est de la forme : « Search(Team=VIPSupport, CCStatus=login) ». Ceci signifie « Rechercher les membres de l'équipe VIPSupport dont le statut est connecté ». Le serveur de contacts 3 reçoit la requête par les moyens de réception 31.

Selon une étape 103, la requête est transmise du serveur de contacts 3 vers la première base de données 4, via les moyens de transmission 34.

Selon une étape 104, les membres de l'équipe A, connectés à l'application de communication 2, sont recherchés et sélectionnés dans la base de données 4. Une liste de contacts est ainsi établie.

Selon une étape 105, ladite liste est transmise de la base de données 4 vers le serveur de contacts 3. Elle est reçue par les moyens de réception 36.

Selon une étape 106, le serveur de contacts 3 transmet une requête à la seconde base de données 5, via les moyens de transmission 35. Cette requête est transmise par protocole LDAP. Le protocole LDAP est un protocole standard permettant de gérer des annuaires, c'est-à-dire d'accéder à des bases d'informations sur les utilisateurs d'un réseau par l'intermédiaire de protocoles TCP/IP. La requête vise à rechercher des données statiques, telles que le numéro de téléphone ou l'adresse mail, pour chacun des membres de la précédente liste.

Selon une étape 107, lesdites données sont recherchées et sélectionnées dans la base de données 5.

Selon une étape 108, lesdites données sont transférées de la base de données 5 vers le serveur de contacts 3, par protocole LDAP. Elles sont reçues par les moyens de réception 37.

Selon une étape 109, les moyens de consolidation 30 du serveur de contacts 3 génèrent une liste de contacts exploitable par l'application de communication 2, comprenant les membres de l'équipe A connectés, avec leur numéro de téléphone et leur adresse mail.

Selon une étape 110, cette liste est alors transférée du serveur de contacts 3 vers l'application de communication 2, via les moyens de transmission 38. La liste de contacts formant le groupe de contacts demandé par l'utilisateur est reçue par les moyens de réception 14.

Selon une étape 111, le groupe de contacts souhaité est alors affiché dans une interface graphique de l'application de communication 2.

Suite à la création du groupe, le groupe est périodiquement mis à jour, suivant les étapes 102 à 111, grâce à des requêtes de mise à jour envoyées par l'application de communication 2.

### MODE DE REALISATION 2

La figure 2 représente schématiquement un deuxième mode de réalisation d'un système 20 de communication selon l'invention. Ce deuxième mode de réalisation est particulièrement adapté à un centre d'appels.

Le système 20 comporte :
- un terminal utilisateur 1' sur lequel est installée une application de communication 2. L'application de communication 2 est dédiée à la communication entre les opérateurs du centre d'appels. Elle est du type « Alcatel-Lucent My Teamwork™ », ou « Microsoft Office Communicator™ ».
- un serveur de contacts 3'
- une première base de données 6 comprenant des informations statiques sur la ou les langues parlées par les opérateurs du centre d'appels
- une deuxième base de données 7 comprenant des informations statiques sur l'équipe à laquelle appartient chacun des opérateurs du centre d'appels
- une troisième base de données 5 comprenant des informations statiques de contact sur les employés du centre d'appels. Ces informations sont par exemple leur adresse mail, ou leur numéro de téléphone.

Le terminal 1' comporte :
- des moyens de transmission de données 13 vers le serveur de contacts 3'
- des moyens de réception de données 14 provenant du serveur de contacts 3'

On appelle balise d'appel une information attachée à un appel. Une balise d'appel standard est le numéro de téléphone de l'appelant. Dans un centre d'appels, il y a généralement des automates ou des logiciels qui récupèrent les balises d'appels. C'est par exemple un automate qui analyse le numéro de téléphone de l'appelant pour déterminer sa provenance, ou un automate qui demande à l'appelant d'appuyer sur une touche en fonction de la raison de l'appel, ou encore un logiciel qui identifie la langue de l'appelant par analyse vocale.

L'application de communication 2 comporte des moyens d'analyse de balises d'appels 15.

Le serveur de contacts 3' comporte :
- des moyens de consolidation 30
- des moyens de traitement de données 32
- des moyens de réception de données 31 provenant du terminal 1'
- des moyens de transmission de données 81 vers la première base de données 6
- des moyens de transmission de données 83 vers la seconde base de données 7
- des moyens de transmission de données 35 vers la troisième base de données 5
- des moyens de réception de données 82 provenant de la première base de données 6
- des moyens de réception de données 84 provenant de la seconde base de données 7
- des moyens de réception de données 37 provenant de la première base de données 5
- des moyens de transmission de données 38 vers le terminal 1'

Dans le deuxième mode de réalisation de l'invention, l'utilisateur est un opérateur du centre d'appels, installé sur le terminal 1'. L'opérateur souhaite qu'à la réception d'un appel, un groupe de contacts soit créé et affiché dans l'application de communication 2, en fonction de caractéristiques de l'appel reçu, comme par exemple sa provenance.

La figure 5 représente le déroulement des étapes du procédé pour la création d'un groupe de contacts en utilisant un système 20 tel qu'illustré dans la figure 2.

Selon une première étape 201, via une interface graphique de l'application de communication 2, l'utilisateur configure la création et l'affichage dynamique de groupes de contacts à réception d'appels. Par exemple, l'opérateur voudrait qu'à la réception d'un appel provenant d'un pays étranger, un groupe de contacts comprenant ses collègues de l'équipe A sachant parler la langue dudit pays, s'affiche dans l'application de communication 2. A titre illustratif, l'opérateur va configurer un groupe de contacts par : « team=Sale Expert, language=%tag1 » et « tag1=spanish, english, french, italian ». Le but de l'opérateur est qu'à réception d'un appel provenant d'Espagne, d'Angleterre, de France ou d'Italie, un groupe de contacts soit dynamiquement créé et affiché dans l'application de communication 2, les contacts dudit groupe de contacts étant les membres de l'équipe d'experts vente qui savent parler la langue du pays d'où provient l'appel.

Selon une deuxième étape 202, à réception d'un appel, les balises d'appels dudit appel sont analysées par les moyens d'analyse 15. Les moyens d'analyse 15 les comparent aux caractéristiques des groupes dynamiques précédemment configurés par l'utilisateur, pour déterminer si un groupe dynamique doit être créé. En reprenant l'exemple précédent, si l'utilisateur reçoit un appel d'Italie, la balise de l'appel indiquant que l'appel provient d'Italie est récupérée, analysée, et comparée aux caractéristiques du groupe programmé par l'utilisateur. Ainsi, les moyens d'analyse 15 détectent qu'il faut créer et afficher un groupe de contacts composé d'experts vente parlant italien.

Selon une troisième étape 203, une requête de création de groupe est générée dans l'application de communication 2 puis transférée au serveur de contacts 3' via les moyens de transmission 13. Cette requête spécifie au serveur de contacts 3' les contacts à rechercher, par exemples les membres de l'équipe d'experts vente, parlant italien. Le serveur de contacts 3' reçoit la requête par les moyens de réception 31. La requête est par exemple : « Search(Team=Sale Expert, language=italian) », ce qui signifie « Rechercher les membres de l'équipe d'experts vente, qui savent parler italien ».

Selon une quatrième étape 204, la requête est découpée en sous-requêtes par les moyens de traitement 32 du serveur de contacts 3'. Par exemple, la première sous-requête est « Search(Team=Sale Expert) », ce qui signifie « Rechercher les membres de l'équipe d'experts vente », et la seconde sous-requête est « Search(language=italian) », ce qui signifie « Rechercher les personnes qui savent parler italien ».

Selon une étape 205, la première sous-requête est transmise vers la première base de données 6 via les moyens de transmission 81.

Selon une étape 206, les membres correspondant à la première sous-requête sont recherchés et sélectionnés dans la base de données 6. Une première liste de contacts est ainsi établie. Selon l'exemple précédent, ladite liste comporte les opérateurs du centre d'appels parlant italien.

Selon une étape 207, ladite liste est transmise de la base de données 6 vers le serveur de contacts 3'. Elle est reçue par les moyens de réception 82.

Selon une étape 208, le serveur de contacts 3' transmet la seconde sous-requête à la seconde base de données 7, via les moyens de transmission 83.

Selon une étape 209, les membres correspondant à la seconde sous-requête sont recherchés et sélectionnés dans la base de données 7. Une seconde liste de contacts est ainsi établie. Selon l'exemple précédent, ladite liste comporte les opérateurs du centre d'appels appartenant à l'équipe d'experts vente.

Selon une étape 210, ladite liste est transmise de la base de données 7 vers le serveur de contacts 3'. Elle est reçue par les moyens de réception 84.

Selon une étape 211, les moyens de traitement 32 du serveur de contacts 3' créent une nouvelle liste composée des membres qui se trouvent à la fois sur la première reçue et la deuxième liste reçue. Dans notre exemple, on a donc une liste de membres de l'équipe d'experts vente, connaissant l'italien.

Selon une étape 212, le serveur de contacts 3' transmet alors une requête à la troisième base de données 5, via les moyens de transmission 35. Cette requête est transmise par protocole LDAP. La requête vise à rechercher des données statiques, telles que le numéro de téléphone ou l'adresse mail, pour chacun des membres de la précédente liste.

Selon une étape 213, lesdites données sont recherchées et sélectionnées dans la base de données 5.

Selon une étape 214, lesdites données sont transférées de la base de données 5 vers le serveur de contacts 3', par protocole LDAP. Elles sont reçues par les moyens de réception 37.

Selon une étape 215, les moyens de consolidation 30 du serveur de contacts 3' génèrent une liste de contacts exploitable par l'application de communication 2. Dans notre exemple, la liste comprend les membres de l'équipe d'experts vente, qui parlent italien, avec leur numéro de téléphone et leur adresse mail.

Selon une étape 216, cette liste est alors transférée du serveur de contacts 3' vers l'application de communication 2, via les moyens de transmission 38. La liste de contacts formant le groupe de contacts demandé par l'utilisateur est reçue par les moyens de réception 14.

Selon une étape 217, le groupe de contacts souhaité est alors affiché dans une interface graphique de l'application de communication 2.

### MODE DE REALISATION 3

La figure 3 représente schématiquement un deuxième mode de réalisation d'un système 30 de communication, selon l'invention.

Le système 30 comporte :
- un terminal utilisateur 1" sur lequel est installée une application de communication 2. L'application de communication 2 est du type « Alcatel-Lucent My Teamwork™ », ou « Microsoft Office Communicator™ ».
- un serveur de contacts 3"
- une base de données d'un réseau social d'entreprise 8 (exemple IBM Lotus Connections), qui contient des informations sur les personnes faisant partie du réseau social. Ces informations sont de deux types : des informations de contact et des balises de profil. Les informations de contacts sont par exemple des numéros de téléphone, ou des adresses mails, tandis que les balises de profil sont des informations sur les domaines de compétence ou les centres d'intérêts (par exemple, « Java » signifie que le contact est compétent en Java).

Le terminal 1 " comporte :
- des moyens de transmission de données 13 vers le serveur de contacts 3"
- des moyens de réception de données 14 provenant du serveur de contacts 3"

L'application de communication 2 comporte des moyens d'analyse de balises d'appels 15.

Le serveur de contacts 3" comporte :
- des moyens de consolidation 30
- des moyens de réception de données 31 provenant du terminal 1"
- des moyens de transmission de données 85 vers l'application de réseau social 8
- des moyens de réception de données 86 provenant de l'application de réseau social 8
- des moyens de transmission de données 38 vers le terminal 1 "

Dans le troisième mode de réalisation de l'invention, l'utilisateur est un employé d'entreprise, installé sur le terminal 1". Lui-même et les autres employés de l'entreprise sont des membres du réseau social d'entreprise 8, ils ont défini préalablement leurs balises de profil. L'objectif de l'invention est le suivant : à la réception d'un appel provenant d'une personne appartenant au réseau social 8, un groupe de contacts doit être créé et affiché dans l'application de communication 2, en fonction de caractéristiques de l'appel reçu.

La figure 6 représente le déroulement des étapes du procédé pour la création d'un groupe de contacts en utilisant un système 30 tel qu'illustré dans la figure 3".

Selon une première étape 301, à réception d'un appel, les balises d'appel dudit appel sont analysées par les moyens d'analyse 15. Dans ce mode de réalisation, les balises d'appels sont les balises de profil de l'appelant.

Selon une deuxième étape 302, une requête de création de groupe est générée dans l'application de communication 2 puis transférée au serveur de contacts 3" via les moyens de transmission 13. Cette requête spécifie au serveur de contacts 3" les contacts à rechercher. Les contacts à rechercher sont les membres du réseau social d'entreprise 8, qui ont les mêmes balises de profil que l'appelant.

Selon une étape 303, la requête est transmise vers la base de données du réseau social 8, via les moyens de transmission 85.

Selon une étape 304, les membres dont la requête demande la recherche, sont recherchés et sélectionnés dans la base de données du réseau social 8.

Selon une étape 305, la liste des membres recherchés, ainsi que leurs informations de contacts, sont transmis de la base de données du réseau social 8 vers le serveur de contacts 3". Elle est reçue par les moyens de réception 86.

Selon une étape 306, les moyens de consolidation 30 du serveur de contacts 3" génèrent une liste de contacts exploitable par l'application de communication 2. Cette liste contient les membres qui ont les mêmes balises de profil que l'appelant, accompagné de leurs informations de contact.

Selon une étape 307, cette liste est alors transférée du serveur de contacts 3" vers l'application de communication 2, via les moyens de transmission 38. La liste de contacts reçue par les moyens de réception 14.

Selon une étape 308, le groupe de contacts souhaité est alors affiché dans une interface graphique de l'application de communication 2.

Les différents modes de réalisation illustrés font intervenir, à titre d'exemple uniquement, un serveur de contacts. En effet, l'application de communication peut, dans d'autres modes de mise en oeuvre, effectuer des requêtes directement sur les annuaires ou bases de données existants.

## Revendications

1. Procédé de création dynamique d'un groupe de contacts apte à fonctionner avec une application de communication sur un terminal utilisateur, ledit procédé comportant les étapes de fonctionnement suivantes :
- génération via ledit terminal utilisateur d'une requête de création d'un groupe de contacts, ladite requête contenant des caractéristiques désirées desdits contacts ;
- transmission d'au moins une sous-requête de ladite requête, contenant au moins une caractéristique élémentaire, ladite caractéristique élémentaire correspondant à une des caractéristiques désirées, vers au moins une première base de données ;
- sélection des données correspondant à la au moins une caractéristique élémentaire dans ladite au moins une base de données ;
- génération d'un groupe de contacts, ledit groupe de contacts étant apte à fonctionner avec ladite application ;
- transmission dudit groupe de contacts vers ledit terminal utilisateur.

2. Procédé selon la revendication précédente **caractérisé en ce qu'**il fait intervenir un serveur de contacts, ledit serveur de contacts intervenant dans au moins une des étapes de fonctionnement suivantes :
- transmission de la requête générée par le terminal utilisateur vers le serveur de contacts ;
- transmission des données sélectionnées vers le serveur de contacts ;
- préalablement à la génération du groupe de contacts, mise en forme, par ledit serveur de contacts, des données sélectionnées, selon un format apte à être exploité par l'application de communication.

3. Procédé selon l'une des revendications précédentes, **caractérisé en ce que** les étapes de fonctionnement sont répétées régulièrement.

4. Procédé selon l'une quelconque des revendications précédentes **caractérisé en ce que** les étapes de fonctionnement sont répétées périodiquement.

5. Procédé selon l'une quelconque des revendications précédentes et selon la revendication 2, **caractérisé en ce que** le procédé comporte en outre l'étape suivante, intervenant entre les étapes de transmission de ladite requête dudit terminal utilisateur vers le serveur de contacts et l'étape de transmission d'au moins une sous-requête de ladite requête :
- division par le serveur de contacts de la requête en plusieurs sous-requêtes

6. Procédé selon l'une quelconque des revendications précédentes et selon la revendication 2, **caractérisé en ce que** le procédé comporte en outre les étapes suivantes, intervenant entre l'étape de transmission des données sélectionnées vers le serveur de contacts et l'étape de mise en forme des données par ledit serveur de contacts :
- transmission vers au moins une deuxième base de données, d'une nouvelle requête générée par le serveur de contacts, ladite nouvelle requête étant établie en fonction des données sélectionnées,
- sélection de données dans ladite seconde base de données
- transmission des données sélectionnées vers le serveur de contacts.

7. Procédé selon l'une quelconque des revendications précédentes, **caractérisé en ce que** la requête est générée suite à une intervention d'un utilisateur du terminal utilisateur.

8. Procédé selon l'une quelconque des revendications 1 à 6, caractérisé en ce la requête est générée suite à un appel entrant dans l'application de communication.

9. Procédé selon la revendication 8, **caractérisé en ce que** les caractéristiques désirées desdits contacts sont déterminées automatiquement en fonction des balises de l'appel entrant.

10. Système de communication apte à mettre en oeuvre le procédé selon l'une quelconque des revendications précédentes.
